# EUROPÄISCHE PATENTSCHRIFT

(11) **EP 1 456 319 B1**
(45) Veröffentlichungstag und Bekanntmachung des Hinweises auf die Patenterteilung: **04.04.2007**
(21) Anmeldenummer: 02793001.5
(22) Anmeldetag: 13.12.2002
(51) Int. Cl.: C09J 11/08, C09J 109/06, C09J 109/08, C09J 125/00

(54) **BODENBELAGKLEBSTOFF**
FLOOR COVERING ADHESIVE
ADHESIF POUR REVETEMENT DE SOL

(30) Priorität: 22.12.2001 DE 10163897; 07.03.2002 DE 10210143
(43) Veröffentlichungstag der Anmeldung: 15.09.2004
(73) Patentinhaber: ARDEX GMBH, 58453 Witten (DE)
(72) Erfinder: BILLECKE, Jochen, 44879 Bochum (DE); OBERSTE-PADTBERG, Rüdiger, 42111 Wuppertal (DE); WANKE, Thomas, 58453 Witten (DE)
(74) Vertreter: Minderop, Ralph H.
(86) Internationale Anmeldenummer: PCT/EP2002/014205
(87) Internationale Veröffentlichungsnummer: WO 2003/055955

(56) Entgegenhaltungen:
- DE-A- 3 917 306

## Beschreibung

Die Erfindung betrifft ein Verfahren zur Herstellung von Bodenbelagklebstoffen, insbesondere von emissionsarmen Bodenbelagklebstoffen, auf der Basis einer Polymerdispersion, eine in Bodenbelagklebstoffen einsetzbare dauerhaft stabile Emulsion und deren Verwendung zur Herstellung von Klebstoffen.

Unter Bodenbelagklebstoffen werden Produkte verstanden, die zur Verklebung von Bodenbelägen wie Linoleum, Teppichböden, PVC und ähnliche geeignet sind. Ursprünglich wurden diese Produkte hergestellt, indem Kolophoniumharze mit Zusatz von Kunstharzen wie Polyvinylether in organischen Lösemitteln (Benzol, Toluol oder Methanol) gelöst wurden. Zur Verminderung der Lösemittelemission bei und nach der Verlegung von Bodenbelägen wurden später wässrige Polymerdispersionen auf der Basis von PVAc, PAcr, EVA verwendet, wobei Kolophoniumharze, Tallharze oder Kohlenwasserstoffharze in aromatischen Lösemitteln wie Toluol oder Xylol gelöst den wässrigen Dispersionen zugegeben wurden. Ferner wurden zur weiteren Verminderung der Emissionen (Verarbeiterschutz) vorgenannte Harze in Weichmachern, wie Phthlalaten, in hoch siedenden Lösemitteln wie Glykolen, Glykolacetaten oder Phenoxyethanol gelöst und den wässrigen Polymerdispersionen zugegeben. Zur weiteren Verminderung der Emissionen von organischen Bestandteilen aus Bodenbelagklebstoffen wurde in die zuvorgenannten Polymerdispersionen Kolophonium- oder Tallharz emulgiert, wobei in letzter Zeit Polymerdispersionen eingesetzt werden, die einen möglichst geringen Restmonomergehalt aufweisen (Verarbeiter- und Verbraucherschutz).

In vielen westeuropäischen Ländern haben sich nach der Umstellung von lösemittelgelösten Klebstoffen auf wässrige Klebstoffe die Polyacrylate als Bindemittelbasis durchgesetzt. Diese wässrigen Polymere gestatten nach Abtrocknung sehr gute Haftungseigenschaften insbesondere zu Polyvinylchlorid (PVC) und anderen elastischen Belägen.

Durch geschickte Formulierung und Verschnitt unterschiedlicher Harztypen lassen sich auch gute Teppichklebstoffe mit hoher, früh einsetzender Anfangshaftung einstellen. Zur Erhöhung der Anfangshaftung solcher Bodenbelagklebstoffe, die in den lösemittelhaltigen Klebstoffen ursprünglich durch die in den Lösemitteln gelösten Bestandteile sowie durch die Lösemittel selbst hervorgerufen wurde, werden weiche Flüssigharze verwendet, die in die Polyacrylatdispersionen einemulgiert werden. Der Einsatz solcher Harze erlaubt zwar den Aufbau einer guten Anfangshaftung (Klebrigkeit), vermindert aber die Endfestigkeit des so formulierten Klebstoffs beträchtlich.

In Ländern, in denen Bodenbelagklebstoffe nicht auf feuchtigkeitsisolierten Untergründen aufgebracht werden, also beispielsweise auf erdberührte Gebäudeteile und somit langfristig oder periodisch der Feuchtigkeit ausgesetzt sind, können Acrylatklebstoffe aufgrund ihrer mangelnden Verseifungsbeständigkeit und Wasserfestigkeit nur bedingt verwendet werden. In solchen Bereichen haben sich emulgierte Klebstoffe auf der Basis sogenannter "High-Solid, "Styrolbutadienlatizes (SBR-Dispersionen) durchgesetzt.

Aufgrund der Instabilität dieser SBR-Latizes können nach dem derzeitigen Stand der Technik in diese nicht, wie bei Polyacrylatdispersionen, Weich- und Hartharze direkt emulgiert werden, sondern müssen zur Formulierung von Klebstoffen mit hoher Anfangsklebrigkeit mit in hochsiedenden Lösemitteln gelösten Kolophoniumharzen und Kohlenwasserstoffharzen formuliert werden. Die Konzentration dieser Lösemittel, hoch siedender Lösemittel oder Weichmacher in handelsüblichen Bodenbelagklebstoffen beträgt bis zu 20 % und ist Quelle für VOCs mit starkem Geruch.

Dies ist der Grund, weshalb sich solche Produkte in verschiedenen Gebieten Europas nicht durchgesetzt haben. Die so eingetragene hohe Menge an vorgenannten Produkten führt zu einer Stabilisierung der SBR-Latizes.

Der Erfindung liegt die Aufgabe zugrunde, einen Bodenbelagklebstoff auf der Basis einer wässrigen Styrol/Butadien-Dispersion bereitzustellen, der einerseits weitgehend geruchsneutral und emissionsarm (GEV-Kriterien) ist und andererseits eine hohe Anfangsklebrigkeit und nach Trocknung eine hohe Filmfestigkeit aufweist.

Gelöst wird diese Aufgabe durch ein Verfahren zur Herstellung von wässrigen Bodenbelagklebstoffen (Emulsion) unter Einsatz einer Styrol/Butadien-(SBR)Dispersion, gegebenenfalls im Verschnitt mit weiteren Polymeren, und einem Anfangsklebrigkeit verleihenden Mittel, in dem man eine Schmelze des Anfangsklebrigkeit verleihenden Mittels der SBR-Dispersion unter Einwirkung einer hohen Scherkraft zum Erhalt einer dauerhaft stabilen Emulsion zusetzt.

Gegenstand der Erfindung ist ferner die so erhaltene Emulsion, die bereits als Bodenbelagklebstoff wirksam ist, und deren Verwendung zur Herstellung von Klebstoffen, die auf anderen Gebieten als zur Verklebung von Bodenbelagstoffen eingesetzt werden.
Durch die erfindungsgemäße Verfahrensführung wird verhindert, daß die Styrol/Butadien-Copolymeren während des Emulgierens mit der klebrigmachenden Substanz koagulieren. Der erfindungsgemäß erhaltene Klebstoff oder Bodenbelagklebstoff erfüllt die Anforderungen der GEV-Kriterien (Emicode EC 1, sehr emissionsarm).

Die Styrol/Butadien-Dispersionen können einen polymeren Feststoffgehalt von 30 bis 85%, vorzugsweise 65 bis 73 %, aufweisen. Diese bilden Filme hoher mechanischer Festigkeit, sie weisen eine hohe Reißfestigkeit und Reißdehnung auf. Styrol/Butadien-Dispersionen sind dem Fachmann bekannt und im Handel erhältlich.

Erfindungsgemäß geeignete klebrige Substanzen oder Anfangsklebrigkeit verleihende Mittel können Harze mit Schmelzpunkten von 1 bis 130°C oder Gemische daraus sein. Geeignete Harze sind beispielsweise Kohlenwasserstoffharze, Kolophoniumharze, Tallharze, Ester dieser Harze, beispielsweise Glycerinester und Trialkylenglykolester mit 1, 2, 3 oder 4 Kohlenstoffatomen im Alkylenrest und deren Gemische. Besonders geeignet sind partiell hydrierte Glycerinester von Balsamkolophonium und Kolophonium-Triethylenglykolester. Die Harze können natürliche Harze sein, sie können weitgehend verestert sein. Die erfindungsgemäß geeigneten klebrigen Substanzen weisen vorzugsweise eine Säurezahl von kleiner 40 auf. Erfindungsgemäß können Weichharze und Hartharze sowie deren Gemische in allen Verhältnissen eingesetzt werden. Weichharze sind solche mit einem Schmelzpunkt bis etwa 40 °C. Hartharze weisen einen Schmelzpunkt oberhalb von etwa 40 °C auf. Das im erfindungsgemäßen Verfahren eingesetzte Anfangsklebrigkeit verleihende Mittel kann einen Schmelzpunkt von 45 bis 95 °C, vorzugsweise von 60 bis 85 °C aufweisen.
In einem ersten Verfahrensschritt kann das klebrigmachende Mittel bei einer Temperatur von etwa 10 bis 25 °C über der Schmelztemperatur des höchstschmelzenden Harzbestandteils des klebrigmachenden Mittels geschmolzen und homogenisiert werden. Die so erhaltene Harzschmelze dient als Komponente zur weiteren Formulierung der Emulsion, die als Bodenbelagklebstoff (Klebstoff) eingesetzt werden kann.

In einer weiteren Verfahrensstufe kann die Styrol/Butadien-Dispersion, sofern sie nicht schon alkalisch eingestellt ist, alkalisch gemacht werden, beispielsweise durch Vermischen mit einer wässrigen Alkali- oder Erdalkalilauge, und auf 40 bis 80 °C erwärmt werden. Der Zusatz der Alkalilauge dient der Verseifung eines Teils des anschließend zugegebenen Harzes, wobei die in situ gebildete Harzseife als Emulgator wirkt und zur Stabilisierung der Emulsion beiträgt.

Anschließend wird die Harzschmelze unter Einwirkung hoher Scherkräfte in die Styrol/Butadien-Dispersion eingearbeitet. Es ist wichtig, daß die Dispersion vorgelegt wird und die Harzschmelze in die Dispersion eingearbeitet wird.

Das erhaltene Zwischenprodukt, eine Emulsion, wird abgekühlt und kann zwischengelagert werden. Eine typische Zusammensetzung weist vorzugsweise einen Feststoffgehalt von 65 bis 75 Gew.%, besonders bevorzugt 67 bis 73 Gew.%, beispielsweise etwa 70 Gew.% auf; das Verhältnis Polymer zu Harz beträgt 100/1 bis 100/400. In dem Fall, in dem ein nichtcarboxyliertes Styrol/Butadien-Copolymer eingesetzt wird, weist die Dispersion vorzugsweise einen pH-Wert von mindestens 8, vorzugsweise 8,5 bis 10, auf.
In einer weiteren Verfahrensstufe kann ein wässriges alkalisches Gemisch eines Harzes wie Triethylenglykolester (TEG) hergestellt werden, dem weitere Hilfsstoffe wie Entschäumer und Emulgator zugesetzt werden können. Vorzugsweise hat dieses Gemisch die Form einer Emulsion, weil so dessen Einarbeitung in die aus Harzschmelze und Styrol/Butadien-Copolymer zunächst erhaltene Emulsion erleichtert wird.

In einer weiteren Verfahrensstufe können dann die beiden vorgefertigten Emulsionen je nach beabsichtigter Anwendung in unterschiedlichen Verhältnissen mit weiteren Polymerdispersionen gemischt werden. In dieser Verfahrensstufe können übliche Einsatzstoffe von Bodenbelagklebstoffen wie wasserrückhaltende Zusatzmittel, Füllstoffe, Verdicker und Konservierungsmittel zugesetzt werden. Die so erhaltenen Klebstoffe sind scherstabil und können mit üblichen Dissolvern oder anderen Großrührwerken hergestellt werden.

Weitere Polymere, die der erfindungsgemäß erhaltenen Emulsion aus Harzschmelze und Styrol/Butadien-Dispersion zugesetzt werden können sind solche auf der Basis von Styrol/Butadien-Polymeren, Polyacrylaten, Polyacrylsäureestern, Ethylenvinyläcetat, Vinylacetat/Versatat-Polymeren und deren Gemische. Diese können in Form einer Dispersion zugesetzt werden.

Die erfindungsgemäß erhaltenen Bodenbelagklebstoffe können ein Polymer/Harzverhältnis von 100/1 bis 100/400 und einen Feststoffgehalt bis zu etwa 85 % aufweisen.

Die folgenden Beispiele dienen der weiteren Erläuterung der Erfindung.

### Beispiel 1

Es wird eine Schmelze mit einer Temperatur von 120 °C hergestellt, die aus 75 Gew.% Glycerinester mit einem Schmelzpunkt von etwa 85°C und 25 Gew.% Triethylenglykolester mit einem Schmelzpunkt von etwa 1 °C besteht und homogenisiert (Stufe 1).

In Stufe 2 wird ein Styrolbutadienlatex nach folgender Rezeptur formuliert:

| | |
|---|---|
| Styrolbutadienlatex | 32.6 Gew.% |
| Entschäumer | 0.2 Gew.% |
| Wasser | 20.3 Gew.% |
| KOH-Lösung (45%ig) | 0.5 Gew.% |
| Harzschmelze aus Stufe 1 | 46.4 Gew.% |

Die Harzschmelze aus Stufe 1 wird unter Einwirkung hoher Scherkräfte in die wässrige Styrol/Butadien-Dispersion emulgiert.

In Stufe 3 wird ein Bodenbelagklebstoff durch Homogenisieren folgender Bestandteile hergestellt:

| | |
|---|---|
| Latex/Harzgemisch aus Stufe 2 | 40.1 Gew.% |
| Triethylenglykolester | 12.0 Gew.% |
| SBR-Latex | 2.7 Gew.% |
| Calciumcarbonatfüllstoff | 33.4 Gew.% |
| KOH-Lösung (45 %ig) | 0 .4 Gew.% |
| Verdicker | 0.9 Gew.% |
| Wasser | 10.4 Gew.% |
| Konservierungsmittel | 0.1 Gew.% |

Der so erhaltene Bodenbelagklebstoff ist für die Verklebung von PVC-Bodenbelägen geeignet. Er ist stabil in einem Temperaturbereich von 5 bis 60 °C über einen Zeitraum von länger als 12 Monaten und weist die folgenden technischen Daten auf:
Viskosität: etwa 70.000 mPa·s
Spezifisches Gewicht: 1,2 g/cm³
Offene Zeit: etwa 60 Minuten
Schälfestigkeit nach 24 Stunden: 1,0 N/mm.

### Beispiel 2

Aus den vorgefertigten Einsatzstoffen aus dem Beispiel 1 wird ein Bodenbelagklebstoff wie folgt formuliert:

| | |
|---|---|
| Latex/Harzgemisch aus Beispiel 1, Stufe 2 | 23.1 Gew.% |
| Acrylatdispersion | 16.1 Gew.% |
| SBR-Latex wie Beispiel 1 | 4.2 Gew.% |
| Triethylenglykolester | 8.2 Gew.% |
| Calciumcarbonatfüllstoff | 39.0 Gew.% |
| KOH-Lösung (45 %ig) | 0.4 Gew.% |
| Verdicker | 1.0 Gew.% |
| Wasser | 7.9 Gew.% |
| Konservierungsstoff | 0.1 Gew.% |

Dieser Klebstoff eignet sich für universelle Einsätze wie für die Verklebung von textilen und elastischen Bodenbelägen. Er ist stabil in einem Temperaturbereich von 5 bis 60 °C über einen Zeitraum von länger als 12 Monaten und weist die folgenden technischen Daten auf:
Viskosität: etwa 50.000 mPa·s
Spezifisches Gewicht: 1,3 g/cm³
Offene Zeit: etwa 30 Minuten
Schälfestigkeit nach 24 Stunden: 1,2 N/mm.

## Patentansprüche

1. Verfahren zur Herstellung von wässrigen Bodenbelagklebstoffen ohne Zusatz von Lösemitteln, hochsiedenden Lösemitteln oder Weichmachern unter Einsatz einer nichtcarboxylierten Styrol/Butadien (SBR)-Dispersion und einem Anfangsklebrigkeit verleihenden Mittel, **dadurch gekennzeichnet, daß** man eine Schmelze des Anfangsklebrigkeit verleihenden Mittels der SBR-Dispersion unter Einwirkung einer hohen Scherkraft zum Erhalt einer stabilen Emulsion zusetzt.

2. Verfahren nach Anspruch 1, **dadurch gekennzeichnet, daß** die Dispersion zum Zeitpunkt des Zumischens des Anfangsklebrigkeit verleihenden Mittels alkalisch ist.

3. Verfahren nach Anspruch 1 oder 2, **dadurch gekennzeichnet, daß** die Styrol/Butadien-Dispersion, bezogen auf die Masse des Feststoffs, in einem Anteil von 10 bis 99 Gew.%, vorzugsweise von 50 bis 70 Gew.%, in der Emulsion enthalten ist.

4. Verfahren nach einem der Ansprüche 1 bis 3, **dadurch gekennzeichnet, daß** das Anfangsklebrigkeit verleihende Mittel einen Schmelzpunkt von 45 bis 110 °C, insbesondere 60 bis 85 °C, hat.

5. Verfahren nach einem der Ansprüche 1 bis 4, **dadurch gekennzeichnet, daß** das Anfangsklebrigkeit verleihende Mittel ein Tallharz, ein Kolophoniumharz, ein oder mehrere Ester dieser Harze, ein Glycerinester oder ein Trialkylenglykolester, dessen Alkylengruppen 1 bis 4 Kohlenstoffatome aufweisen, oder Gemisch daraus ist.

6. Verfahren nach einem der Ansprüche 1 bis 5, **dadurch gekennzeichnet, daß** das klebrigmachende Harz oder Harzester eine Säurezahl von 0 bis 40 aufweist.

7. Verfahren nach einem der Ansprüche 1 bis 6, **dadurch gekennzeichnet, daß** Massenverhältnis von Polymerdispersion zu dem Klebrigkeit verleihenden Mittel in der Emulsion 100/1 bis 1/4, bezogen auf den Polymergehalt der Dispersion, beträgt.

8. Verfahren nach einem der Ansprüche 1 bis 7, **dadurch gekennzeichnet, daß** man in der Emulsion einen pH-Wert von mindestens 8, insbesondere 8,5 bis 10, einstellt.

9. Verfahren nach einem der Ansprüche 1 bis 7, **dadurch gekennzeichnet, daß** man der Emulsion ein weiteres Polymer zusetzt.

10. Verfahren nach Anspruch 9, **dadurch gekennzeichnet, daß** das weitere Polymer ausgewählt ist aus einem Polyacrylat, Polyacrylatester, Acrylnitril-Copolymerisat, Vinylester/Vinylacetat/Etylen-Polymer, Ethylenvinylacetat, Vinylacetat/Versatat-Copolymer, Styrol/Butadien-Copolymer sowie deren Gemischen.

11. Verfahren nach einem der Ansprüche 1 bis 10, **dadurch gekennzeichnet, daß** man der Emulsion übliche Hilfsstoffe für Bodenbelagklebstoffe zusetzt.

12. Emulsion erhältlich nach einem Verfahren der Ansprüche 1 bis 8, **dadurch gekennzeichnet, daß** sie ein Harzgemisch mit einem Schmelzpunkt von 45 bis 110 °C, emulgiert mit einer wässrigen Styrol/Butadien-Dispersion, enthält, das Verhältnis Styrol/Butadien-Copolymer zu Harz 100/1 bis 100/400 und der Feststoffgehalt der Emulsion 65 bis 75 Gew.%, bezogen auf die Masse der Emulsion, beträgt.

13. Emulsion nach Anspruch 12, **dadurch gekennzeichnet, daß** das Styrol/Butadien-Copolymer ein nichtcarboxyliertes Styrol/Butadien-Copolymer ist und die Emulsion einen pH-Wert von mindestens 8, insbesondere 8,5 bis 10, aufweist.

14. Verwendung einer nach einem Verfahren der Patentansprüche 1 bis 8 erhaltenen Emulsion zur Herstellung eines Klebstoffs.

## Claims

1. Method for producing aqueous floor covering adhesives without the addition of solvents, high-boiling solvents or plasticizers, using a non-carboxylated styrene/butadiene (SBR) dispersion and an agent which provides initial tack, **characterised in that** a melt of the agent which provides initial tack is added to the SBR dispersion under the effect of a high shear force so as to obtain a stable emulsion.

2. Method according to claim 1, **characterised in that** the dispersion is alkaline at the time of addition of the agent which provides initial tack.

3. Method according to claim 1 or 2, **characterised in that** the styrene/butadiene dispersion, based on the weight of the solids, is present in the emulsion in a content of 10 to 99% by weight, preferably 50 to 70% by weight.

4. Method according to one of claims 1 to 3, **characterised in that** the agent which provides initial tack has a melting point of 45 to 110°C, in particular 60 to 85°C.

5. Method according to one of claims 1 to 4, **characterised in that** the agent which provides initial tack is a tall oil resin, a rosin, one or more esters of these resins, a glycerol ester, or a trialkylene glycol ester, the alkylene groups of which have 1 to 4 carbon atoms, or a mixture thereof.

6. Method according to one of claims 1 to 5, **characterised in that** the resin or resin ester which provides tack has an acid number of 0 to 40.

7. Method according to one of claims 1 to 6, **characterised in that** the weight ratio of polymer dispersion to the agent which provides tack in the emulsion is 100/1 to 1/4, based on the polymer content of the dispersion.

8. Method according to one of claims 1 to 7, **characterised in that** a pH value of at least 8, in particular 8.5 to 10, is set in the emulsion.

9. Method according to one of claims 1 to 7, **characterised in that** a further polymer is added to the emulsion.

10. Method according to claim 9, **characterised in that** the further polymer is selected from a polyacrylate, polyacrylate ester, acrylonitrile copolymer, vinyl ester/vinyl acetate/ethylene polymer, ethylene vinyl acetate, vinyl acetate/versatate copolymer, styrene/butadiene copolymer, and mixtures thereof.

11. Method according to one of claims 1 to 10, **characterised in that** conventional auxiliaries for floor covering adhesives are added to the emulsion.

12. Emulsion obtainable by a method according to claims 1 to 8, **characterised in that** it contains a resin mixture with a melting point of 45 to 110°C, emulsified with an aqueous styrene/butadiene dispersion, wherein the ratio of styrene/butadiene copolymer to resin is 100/1 to 100/400 and the solids content of the emulsion is 65 to 75% by weight, based on the total weight of the emulsion.

13. Emulsion according to claim 12, **characterised in that** the styrene/butadiene copolymer is a non-carboxylated styrene/butadiene copolymer and the emulsion has a pH value of at least 8, in particular 8.5 to 10.

14. Use of an emulsion obtained by a method according to claims 1 to 8 to produce an adhesive.

## Revendications

1. Procédé de fabrication d'adhésifs aqueux sans addition de solvants de solvants volatils ou de plastifiants, pour revêtements de sol, par recours à une dispersion de styrène/butadiène non carboxylé (SBR) et à un agent qui confère une adhérence initiale, **caractérisé en ce que** l'on ajoute un agent fondu qui confère une adhérence initiale à la dispersion de SBR en exerçant une force de cisaillement élevée pour obtenir une émulsion stable.

2. Procédé selon la revendication 1, **caractérisé en ce que** la dispersion est alcaline au moment de l'addition de l'agent qui confère une adhérence initiale.

3. Procédé selon les revendications 1 ou 2, **caractérisé en ce que** l'émulsion contient la dispersion de styrène et de butadiène à une teneur de 10 à 99 % en poids et de préférence de 50 à 70 % en poids par rapport à la masse de solides.

4. Procédé selon l'une des revendications 1 à 3, **caractérisé en ce que** l'agent qui confère une adhérence initiale a un point de fusion de 45 à 110° C et en particulier de 60 à 85° C.

5. Procédé selon l'une des revendications 1 à 4, **caractérisé en ce que** l'agent qui confère une adhérence initiale est une résine d'huile de pin, une résine de colophane, un ou plusieurs esters de ces résines, un ester glycérique, un ester de trialkylène glycol dont les groupes alkylène comptent de 1 à 4 atomes de carbone ou un mélange de ces substances.

6. Procédé selon l'une des revendications 1 à 5, **caractérisé en ce que** la résine ou l'ester de résine qui confèrent une adhérence ont un indice d'acidité de 0 à 40.

7. Procédé selon l'une des revendications 1 à 6, **caractérisé en ce que** par rapport à la teneur en polymère de la dispersion dans l'émulsion, le rapport massique entre la dispersion de polymère et l'agent qui confère l'adhérence est compris entre 100/1 et 1/4.

8. Procédé selon l'une des revendications 1 à 7, **caractérisé en ce que** l'on établit dans l'émulsion un pH dont la valeur est d'au moins 8 et est en particulier comprise entre 8,5 et 10.

9. Procédé selon l'une des revendications 1 à 7, **caractérisé en ce que** l'on ajoute un autre polymère à l'émulsion.

10. Procédé selon la revendication 9, **caractérisé en ce que** l'autre polymère est sélectionné parmi un poly(ester d'acrylate), un copolymère d'acrylonitrile, un polymère d'ester de vinyle, d'acétate de vinyle et d'éthylène, un vinylacétate d'éthylène, un copolymère d'acétate de vinyle et de versatate, un copolymère de styrène et de butadiène ainsi que leurs mélanges.

11. Procédé selon l'une des revendications 1 à 10, **caractérisé en ce que** l'on ajoute à l'émulsion les substances auxiliaires habituelles pour des adhésifs de revêtement de sol.

12. Emulsion obtenue par un procédé selon les revendications 1 à 8, **caractérisée en ce qu'**elle contient un mélange de résines dont le point de fusion est compris entre 45 et 110° C, émulsifié avec une dispersion aqueuse de styrène et de butadiène, **en ce que** le rapport entre le copolymère de styrène et de butadiène et la résine est compris entre 100/1 et 100/400 et **en ce que** la teneur en solides de l'émulsion est comprise entre 65 et 75 % en poids par rapport à la masse de l'émulsion.

13. Emulsion selon la revendication 12, **caractérisée en ce que** le copolymère de styrène et de butadiène est un copolymère de styrène et de butadiène non carboxylé et **en ce que** l'émulsion présente un pH dont la valeur est d'au moins 8 et est en particulier comprise entre 8,5 et 10.

14. Utilisation d'une émulsion obtenue par un procédé selon les revendications 1 à 8 pour la préparation d'un adhésif.
